# EUROPEAN PATENT APPLICATION

(11) **EP 4 592 922 A1**
(43) Date of publication of application: **30.07.2025**
(21) Application number: 25150334.8
(22) Date of filing: 06.01.2025
(51) Int. Cl.: G06Q 10/08, G06V 20/68

(54) **SYSTEMS AND METHODS FOR IMPROVING THE SHELF LIFE OF PERISHABLE ITEMS**

(30) Priority: 29.01.2024 US 202418425805
(71) Applicant: Honeywell International Inc., Charlotte, NC 28202 (US)
(72) Inventor: JOSEPH, Kingslin, Charlotte, 28202 (US); JOSEPH, Jeslin Paul, Charlotte, 28202 (US); JAIN, Abhisekh, Charlotte, 28202 (US); RAVI, Anupama, Charlotte, 28202 (US); GEORGE, Renjith, Charlotte, 28202 (US)
(74) Representative: Haseltine Lake Kempner LLP

(57) **Abstract**

A video-based system for controlling one or more environmental parameters of a food storage area of a facility may comprise an environmental control system that services the food storage area of the facility and a video camera. The video camera may include a camera housing, a camera housed by the camera housing for providing a video stream of the food storage area, a communication port for communicating with the environmental control system, and a controller housed by the camera housing and operatively coupled to the camera and the communication port. The controller may be configured to analyze the video stream captured by the camera to identify a food item in the food storage area, identify one or more ideal food storage environmental parameters for the identified food item, and transmit the one or more ideal food storage environmental parameters for the identified food item to the environmental control system.

## Description

### Technical Field

The present disclosure relates generally to improving the shelf life of perishable items, and more particularly relates to systems, including video-based systems, for controlling one or more environmental parameters of a storage area.

### Background

Food waste is a global concern. The United Nations Environment Programme Food Waste Index Report 2021 estimates that around 931 million tons of food waste was generated in 2019. Common food items, such as, but not limited to rice, wheat, maize, beans, etc. should be stored at a specific temperature and relative humidity to extend the shelf life of said items. For example, when food items are not stored under the proper environmental condition during transportation, storage, etc., food spoilage may occur. Food waste may lead to problems with consequences to the environment, economy, and/or society. Food production requires extensive resources, such as water, land, and energy. When food is wasted, these valuable resources are wasted as well. This may lead to resource depletion and inefficiencies in the food system. Further, while food is being wasted, millions of people around the world suffer from hunger and food insecurity. By reducing food waste, surplus food can be redirected to those in need, helping to alleviate hunger. Additionally, food waste may generate a substantial carbon footprint. When food decomposes in landfills, the food may produce methane, a potent greenhouse gas that contributes to climate change.

Moreover, food waste may represent a significant economic loss for consumers, businesses, and governments. For example, consumers, businesses, and governments may experience financial losses when resources invested in food production, transportation, and retailing are wasted. Food waste may also raise ethical concerns as it may highlight the imbalance between food abundance in some regions and food scarcity in others. In some examples, food production may involve the conversion of natural habitats to farms. This may lead to the loss of biodiversity. Food waste may exacerbate the environmental impacted associated with food production and land use. Discarded food may lead to unsanitary conditions and may attract pests. Unsanitary conditions and/or pests may pose potential health risks to humans. Food waste may occur at various points along the supply chain including, but not limited to, agricultural production, processing, distribution, retail, the end consumer, etc. What would be desirable are methods and systems for improving the monitoring and the controlling of environmental conditions in a food storage area.

### Summary

The present disclosure relates generally to a systems and methods for improving the shelf life of perishable items such as food products, chemical products, healthcare products, pharmaceutical products, and others.

An example of the disclosure includes a method for controlling one or more environmental parameters of a food storage area of a facility. The illustrative method includes capturing video of a food storage area of a facility using a video camera. The video camera itself may be configured to: identify a food item in the captured video of the food storage area, identify one or more ideal food storage environmental parameters for the identified food item, and transmit the identified one or more ideal food storage environmental parameters from the video camera to an environmental control system of the facility that services the food storage area. The illustrative method may further include controlling the environmental control system of the facility in accordance with the one or more ideal food storage environmental parameters transmitted by the video camera to the environmental control system. By having a video camera that itself has an in-built algorithm (Artificial Intelligence, machine vision and/or other algorithm) that identifies the food items contained in the video captured by the video camera, and identifies ideal food storage environmental parameters (e.g. temperature set point, relative humidity set point) for the identified food items, and transmits the identified ideal food storage environmental parameters to an HVAC/Refrigeration system to control the environment in which the food items are stored, a system for appropriately controlling the environmental parameters of one or more food storage areas or zones of a facility may be easily deployed.

In another example, a video camera for use in a food storage area may include a camera housing, a camera housed by the camera housing, the camera providing a video stream of a food storage area, and a controller housed by the camera housing and operatively coupled to the camera. The controller may be configured to analyze the video stream captured by the camera to identify a food item in the food storage area, obtain one or more ideal food storage environmental parameters for the identified food item, and transmit the one or more ideal food storage environmental parameters to an environmental control system that services the food storage area.

In another example, a video-based system for controlling one or more environmental parameters of a food storage area of a facility may include a video camera that captures video stream of a food storage area of the facility and an environmental control system that services the food storage area of the facility. The video camera may include a camera housing, a camera housed by the camera housing for providing a video stream of the food storage area, a communication port for communicating with the environmental control system, and a controller housed by the camera housing and operatively coupled to the camera and the communication port. The controller may be configured to analyze the video stream captured by the camera to identify a food item in the food storage area, identify one or more ideal food storage environmental parameters for the identified food item, and transmit the one or more ideal food storage environmental parameters for the identified food item to the environmental control system via the communication port.

The preceding summary is provided to facilitate an understanding of some of the innovative features unique to the present disclosure and is not intended to be a full description. A full appreciation of the disclosure can be gained by taking the entire specification, claims, figures, and abstract as a whole.

### Brief Description of the Figures

The disclosure may be more completely understood in consideration of the following description of various examples in connection with the accompanying drawings, in which:
Figure 1 is a schematic block diagram of an illustrative video-based system for controlling one or more environmental parameters of a food storage area of a facility;
Figure 2 is a flow chart of an illustrative method for controlling one or more environmental parameters of the storage areas of the facility; and
Figure 3 is a flow chart of an illustrative method for generating one or more models for food recognition.

While the disclosure is amenable to various modifications and alternative forms, specifics thereof have been shown by way of example in the drawings and will be described in detail. It should be understood, however, that the intention is not to limit the disclosure to the particular examples described. On the contrary, the intention is to cover all modifications, equivalents, and alternatives falling within the spirit and scope of the disclosure.

### Description

The following description should be read with reference to the drawings, in which like elements in different drawings are numbered in like fashion. The drawings, which are not necessarily to scale, depict examples that are not intended to limit the scope of the disclosure. Although examples are illustrated for the various elements, those skilled in the art will recognize that many of the examples provided have suitable alternatives that may be utilized.

All numbers are herein assumed to be modified by the term "about", unless the content clearly dictates otherwise. The recitation of numerical ranges by endpoints includes all numbers subsumed within that range (e.g., 1 to 5 includes 1, 1.5, 2, 2.75, 3, 3.80, 4, and 5).

As used in this specification and the appended claims, the singular forms "a", "an", and "the" include the plural referents unless the content clearly dictates otherwise. As used in this specification and the appended claims, the term "or" is generally employed in its sense including "and/or" unless the content clearly dictates otherwise.

It is noted that references in the specification to "an embodiment", "some embodiments", "other embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is contemplated that the feature, structure, or characteristic is described in connection with an embodiment, it is contemplated that the feature, structure, or characteristic may be applied to other embodiments whether or not explicitly described unless clearly stated to the contrary.

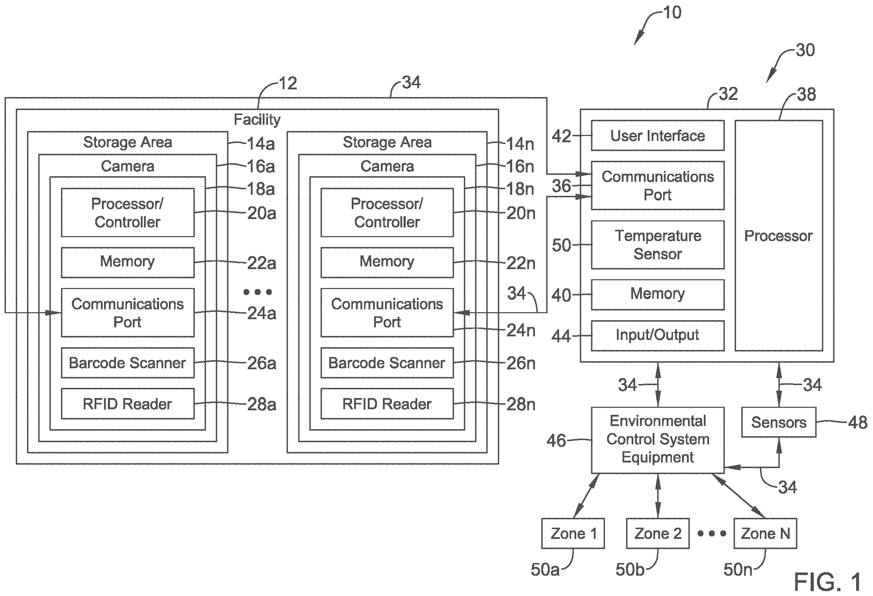

Figure 1 is a schematic block diagram of an illustrative video-based system 10 that may utilize one or more cameras 16a-n to control one or more environmental parameters of one or more food storage areas 14a-n of a facility 12. While the present disclosure is discussed with respect to food storage, it should be understood that the present systems and methods may be used in other applications where an item may be perishable or require particular storage conditions. For example, the present systems and methods may be used with the storage of chemical products, healthcare products, pharmaceuticals, during transportation of said products, in hospitals, pharmacies, homes, industrial facilities, or the like. One or more cameras 16a-n may be positioned within the storage areas 14a-n. In some cases, each storage area 14a-n may have one or more of its own unique cameras 16a-n. Each camera 16a-n of the one or more cameras may have a field of view that encompasses at least part of the respective storage area 14a-n. When more than one camera 16a-n is provided, the fields of view of the cameras may overlap or encompass separate and distinct regions, as desired. It is contemplated that the storage areas 14a-n may include as many cameras as needed such that at least one field of view encompasses each distinct storage area 14a-n.

The video cameras 16a-n may each include a housing 18a-n for enclosing the components of the video camera 16a-n. The housing 18a-n may include multiple components configured to be secured to one another. In some cases, the video camera 16a-n may be a dome camera including a transparent protective dome. However, this is not required. In some cases, the video camera 16a-n may be bullet camera. The video camera 16a-n may have a fixed field of view or may be a pan-tilt-zoom (PTZ) camera, as desired. It is contemplated that the video camera 16a-n may be for indoor and/or outdoor use and for day and/or night use, as desired. In some cases, the housing 18a-n may be weatherproof for use outside and/or one or more night vision light emitting diodes (LED) may be provided for night use. The video cameras 16a-n may include additional structural and/or functional elements of a video camera not described herein, but for clarity, just some of the elements are shown/described.

Within the housing 18a-n, the illustrative video cameras 16a-n may include or house a lens. The lens may be configured to direct incoming light towards an image sensor (not explicitly shown). The image sensor may process the light captured by the lens into a digital signal. The digital signal (e.g., the video recording) may be stored in a memory 22a-n of the video camera 16a-n and/or transferred to a video management system (VMS), a network video recorder (NVR) and/or other edge device. In some cases, the image sensor may be provided as a part of a control printed circuit board, although this is not required. The control printed circuit board may include a processor or controller 20a-n. While some components are described as being a part of the control printed circuit board, these components may be provided separate from a control printed circuit board. In some cases, the controller 20a-n may be configured to analyze the image(s), match the images to a product, identify the ideal environmental parameters for storage of the product, and transmit the ideal environmental parameters to an environmental control system 30, as will be described in more detail herein. The controller 20a-n may also be in communication with, or operatively coupled to the memory 22a-n. The memory may be used to store any desired information, such as, but not limited to, machine instructions for how to process data from digital signals from the image sensor, databases of items that may be stored in the facility 12, ideal environmental parameters for the items, or the like. The memory may be any suitable type of storage device including, but not limited to, RAM, ROM, EPROM, flash memory, a hard drive, and/or the like. In some cases, the controller environmental parameters and/or image sensor may store information within the memory 22a-n, and may subsequently retrieve the stored information from the memory.

In some embodiments, the video cameras 16a-n may be equipped with a communications module 24a-n. The communications module 24a-n may allow the video camera 16a-n to communicate with other components of the facility, such as, but not limited to, the environmental control system 30, a network video recorder (NVR), and/or the like. The communications module 24a-n may provide wired and/or wireless communication. In one example, the communications module 24a-n may use any desired wireless communication protocol such as but not limited to cellular communication, ZigBee, REDLINK^{™}, Bluetooth, WiFi, IrDA, dedicated short range communication (DSRC), EnOcean, and/or any other suitable common or proprietary wireless protocol, as desired. In another example, the communications module 24a-n may communicate over a network cable. In some cases, the network cable may be a power over Ethernet (POE) cable. The illustrative video camera 16a-n may receive power over a POE cable, a separate power cable, a battery, or any other suitable power source, as desired.

The illustrative video cameras 16a-n may further include a back box. The back box may form a part of the housing 18a-n or may be mounted to the housing 18a-n to mount the video camera 16a-n to a wall or ceiling. In some cases, the back box may be coupled to an exterior of the housing 18a-n while in other cases, the back box may be within or interior to the housing 18a-n. In some cases, the back box may house cable connections. For example, the back box may house a connection between, for example: a network cable and the control printed circuit board 20a-n, a connection between a power cable and the control printed circuit board 20a-n, and/or an audio cable and the control printed circuit board 20a-n. It is contemplated that the video camera 16a-n may include other cables and/or connections, as desired. In some cases, the connection between the video camera 16a-n and the network may be tested using the internal circuitry of the connection ports within the back box. The ports may include LEDS which glow a certain color to indicate connectivity.

The video camera 16a-n may further include a barcode scanner 26a-n. The barcode scanner 26a-n may be configured to scan a barcode on a packaged item and transmit the data to the processor/controller 20a-n. The processor/controller 20a-n may use the data from the scanned barcode to help identify the scanned item. Rather than including a separate barcode scanner, in some cases, the processor/controller 20a-n may digitally process the video stream captured by the camera and identify and read barcodes on items captured in the video stream.

Alternatively, or additionally, the video camera 16a-n may include a radiofrequency identification (RFID) scanner 28a-n. The RFID scanner 28a-n may be configured to read RFID chips that may be included with a food item. For example, an RFID chip may be secured to a pallet, positioned within a crate or box, or otherwise associated with the packaging of the food item. The RFID chip may store information related to the actual food product, the type of food product, the ideal environmental parameters for storage thereof, and/or the like.

The video camera 16a-n may be in communication with a controller 32 of the environmental control system 30 configured to service the food storage areas 14a-n of the facility 12. The controller 32 may be configured to receive data from the video cameras 16a-n, analyze the data, and make decisions based on the data. For example, the controller 32 may include control circuitry and logic configured to operate, control, command, etc. the various components of the environmental control system equipment 46 of the environmental control system 30 and/or issue alerts or notifications. In some examples, the environmental control system equipment 46 may be a part of one or more heating, ventilation, and air conditioning (HVAC) systems and/or one or more refrigeration systems (e.g., for climate control of a refrigerator or freezer room/system). The environmental control system 30 may include any number of pieces of system equipment or devices 46. Some illustrative devices may include, but are not limited to a furnace, a heat pump, an electric heat pump, a geothermal heat pump, an electric heating unit, an air conditioning unit, a roof top unit, a humidifier, a dehumidifier, an air exchanger, an air cleaner, a damper, a valve, blowers, fans, motors, air scrubbers, ultraviolet (UV) lights, compressors, condensers, evaporators, and/or the like. The environmental control system 30 may further include a system of ductwork and air vents (not explicitly shown). In some examples, the environmental control system equipment 46 may be configured to control one or more zones 50a-n. In some cases, a zone 50a-n may be correlated to or associated with a corresponding storage area 14a-n. For example, each zone 50a-n or storage area 14a-n may be controlled according to its own unique setpoints. The environmental control system 30 may further include one or more sensors or devices 48 configured to measure parameters of the environment to be controlled. The environmental control system 30 may include more than one sensor or device of each type, as needed to control the system. It is contemplated that large buildings, such as, but not limited to a warehouse building, may include a plurality of different sensors in each room, within different areas of a larger room, and/or within certain types of rooms. For example, one or more sensors 48 may be positioned within each of the storage areas 14a-n to collect data relevant to the particular storage area 14a-n in which the sensors 48 are located. The one or more sensors or devices 48 may include, but are not limited to, temperatures sensors, humidity sensors, carbon dioxide sensors, pressure sensors, occupancy sensors, proximity sensors, etc. Each of the sensor/devices 48 may be operatively connected to the control device 32 via a corresponding communications port (not explicitly shown). It is contemplated that the communications port may be wired and/or wireless. When the communications port is wireless, the communications port may include a wireless transceiver, and the control device 32 may include a compatible wireless transceiver. It is contemplated that the wireless transceivers may communicate using a standard and/or a proprietary communication protocol. Suitable standard wireless protocols may include, for example, cellular communication, ZigBee, Bluetooth, WiFi, IrDA, dedicated short range communication (DSRC), EnOcean, or any other suitable wireless protocols, as desired.

The controller 32 may be in communication with any number of video cameras 16a-n as desired, such as, but not limited to, one, two, three, four, ten, one hundred, or more. In some cases, there may be more than one controller 32, each in communication with a number of video cameras 16a-n. For example, a large facility 12 may have more than one HVAC system, more than one refrigeration system, combinations of HVAC systems and refrigeration systems, and the like that may each be controlled by an individual controller or a group of devices may be controlled by a common controller. It is contemplated that the number of video cameras 16a-n may be dependent on the size and/or function of the facility 12. The video cameras 16a-n may be selected and configured to monitor differing aspects or locations of the building and/or areas of the facility 12.

The controller 32 may be configured to communicate with the video cameras 16a-n, the environmental control system equipment 46 and/or the sensors 48 over a first network 34, including a local area network (LAN) or a wide area network (WAN), or the connection may be made to an external computer (for example, through the Internet using an Internet Service Provider). Such communication can occur via a first communications port 36 at the controller 32 and a communications module 24a-n at the video cameras 16a-n and communications modules (not explicitly shown) at the system equipment 46 and/or sensors 48. The first communications port 36 of the controller 32 and/or the communications modules 24a-n of the video cameras 16an, system equipment 46 and/or sensors 48 can be a wireless communications port including a wireless transceiver for wirelessly sending and/or receiving signals over a wireless network. However, this is not required. In some cases, the first network 34 may be a wired network or combinations of a wired and a wireless network.

While not explicitly shown, the controller 32 may include a second communications port which may be a wireless communications port including a wireless transceiver for sending and/or receiving signals over a second wireless network. However, this is not required. In some cases, the second network may be a wired network or combinations of a wired and a wireless network. In some embodiments, the second communications port may be in communication with a wired or wireless router or gateway for connecting to the second network, but this is not required. When so provided, the router or gateway may be integral to (e.g., within) the controller 32 or may be provided as a separate device. The second network may be a wide area network or global network (WAN) including, for example, the Internet. The controller 32 may communicate over the second network with an external web service hosted by one or more external web servers (e.g., the cloud).

The controller 32 may include a processor 38 (e.g., microprocessor, microcontroller, etc.) and a memory 40. In some cases, the controller 32 may include a user interface 42 including a display and a means for receiving user input (e.g., touch screens, buttons, keyboards, etc.). In some cases, the user interface 42 may be integral to the controller 32. Alternatively, or additionally, the controller 32 may be operatively coupled to a remotely located user interface including a display and a means for receiving user input. For example, the remotely located user interface may be a display in a facility monitoring station, a portable device, such as, but not limited to a smartphone, tablet computer, laptop computer, etc., or other such device. It is contemplated that the remote user interface may communicate with the controller 32 via the first network 34 and/or the second network, as desired.

The memory 40 may be in communication with the processor 38. The memory 40 may be used to store any desired information such as, but not limited to, control algorithms, configuration protocols, set points, schedule times, diagnostic limits such as, for example, differential pressure limits, delta T limits, security system arming modes, audio classification models, and the like. In some embodiments, the memory 40 may include specific control programs or modules configured to analyze data obtained from the video cameras 16a-n for a particular condition or situation, although this is not required. The memory 40 may be any suitable type of storage device including, but not limited to, RAM, ROM, EPROM, flash memory, a hard drive, and/or the like. In some cases, the processor 38 may store information within the memory 40 and may subsequently retrieve the stored information from the memory 40.

In some embodiments, the controller 32 may include an input/output block (I/O block) 44 having a number of wire terminals for receiving one or more signals from the video cameras 16a-n and/or system components and/or for providing one or more control signals to the video cameras 16a-n and/or system equipment 46. For example, the I/O block 44 may communicate with one or more components of the system 10, including, but not limited to, the video cameras 16a-n and/or the environmental control system equipment 46 (e.g., heating, cooling, humidity control, refrigeration, ventilation, and the like). The controller 32 may have any number of wire terminals for accepting a connection from one or more components of the system 10. However, how many wire terminals are utilized and which terminals are wired is dependent upon the particular configuration of the system 10. Different systems 10 having different components and/or types of components may have different wiring configurations. In some cases, the I/O block 44 may be configured to receive wireless signals from the video cameras 16a-n and/or one or more components or sensors (not explicitly shown). Alternatively, or in addition to, the I/O block 44 may communicate with another controller. It is further contemplated that the I/O block 44 may communicate with another controller which controls a separate building control system, such as, but not limited to, an HVAC controller, a refrigeration system controller etc.

The controller 32 may also include one or more sensors such as, but not limited to, a temperature sensor, a humidity sensor, an occupancy sensor, a proximity sensor, and/or the like. In some cases, the controller 32 may include an internal temperature sensor 50, but this is not required.

The user interface 42, when provided, may be any suitable user interface 42 that permits the controller 32 to display and/or solicit information, as well as accept one or more user interactions with the controller 32. For example, the user interface 42 may permit a user to locally enter data such as control set points, starting times, ending times, schedule times, diagnostic limits, responses to alerts, associate sensors to alarming modes, and the like. In one example, the user interface 42 may be a physical user interface that is accessible at the controller 32 and may include a display and/or a distinct keypad. The display may be any suitable display. In some instances, a display may include or may be a liquid crystal display (LCD), and in some cases an e-ink display, a fixed segment display, or a dot matrix LCD display. In other cases, the user interface may be a touch screen LCD panel that functions as both display and keypad. The touch screen LCD panel may be adapted to solicit values for a number of operating parameters and/or to receive such values, but this is not required. In still other cases, the user interface 42 may be a dynamic graphical user interface.

In some instances, the user interface 42 need not be physically accessible to a user at the controller 32. Instead, the user interface may be a virtual user interface 42 that is accessible via the first network 34 and/or second network using a mobile wireless device such as a smart phone, tablet, e-reader, laptop computer, personal computer, key fob, or the like. In some cases, the virtual user interface 42 may be provided by an app or apps executed by a user's remote device for the purposes of remotely interacting with the controller 32. Through the virtual user interface 42 provided by the app on the user's remote device, the user may change control set points, starting times, ending times, schedule times, diagnostic limits, respond to alerts, update their user profile, view energy usage data, arm or disarm the security system, configured the alarm system, and/or the like.

As described above, the controller 32 may be alternatively or additionally in communication with a remote user interface or display device via the first and/or second networks 34. The remote user interface may be located, for example, in a control room, a main office, a monitoring station, etc. Alternatively, or additionally, the remote user interface may be a portable device carried by a user (e.g., a smart phone, a tablet computer, a laptop, a watch, etc.). The remote user interface may be a physical device or a virtual user interface (e.g., accessible via the internet) as described above. In some cases, the remote user interface may include a display and/or a distinct keypad. The display may be any suitable display. It is contemplated that in addition to being in communication with the controller 32, the remote user interface may be in communication with other building control devices or systems including the video cameras 16an.

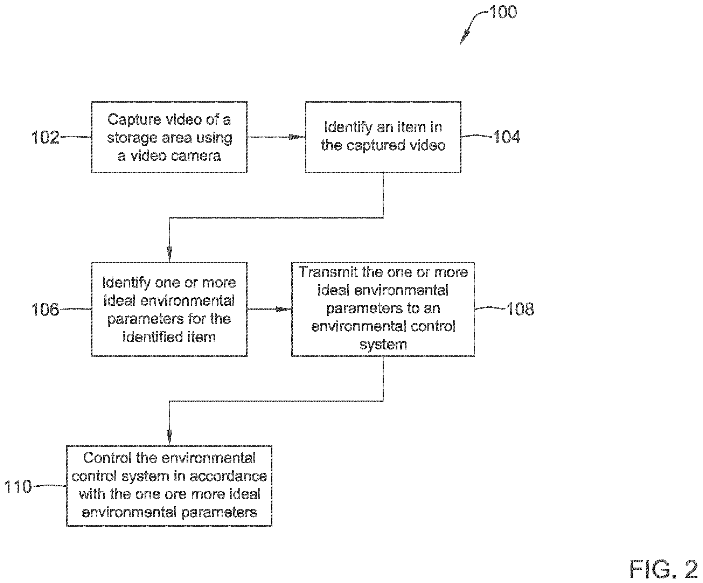

Figure 2 is a flow chart of an illustrative method 100 for controlling one or more environmental parameters of the storage areas 14a-n of the facility 12. For brevity, the method 100 will be described with respect to a particular video camera 16a monitoring a particular storage area 14a. However, it should be understood that the method 100 may be performed on more than one storage area 14a-n substantially simultaneously. While the method 100 is described with respect to food items, food storage, etc., it should be understood the method may be used in the identification of other items and/or in other locations, as desired. The video camera 16a captures video of the food storage area 14a, as shown at block 102. The captured video stream may be high-resolution to provide clear and detailed images for analysis. The processor 20a of the video camera 16a may analyze the video stream to identify at least one food item in the captured video, as shown at block 104.

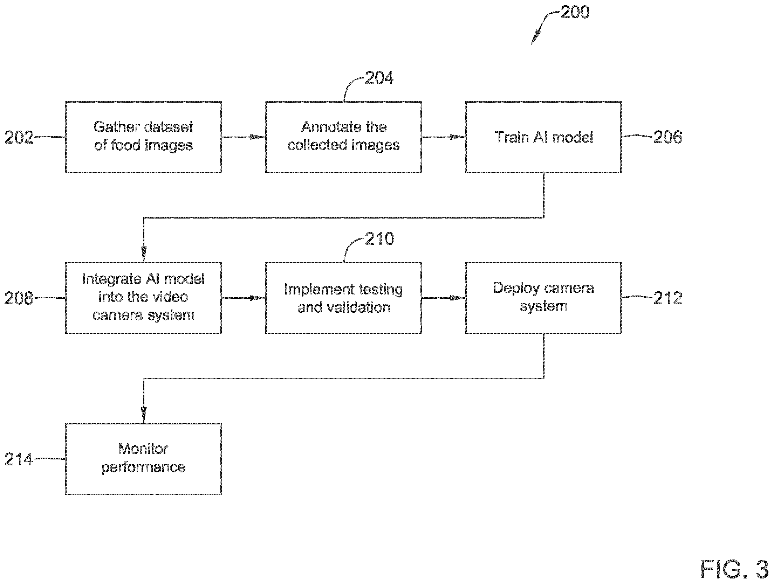

It is contemplated that the processor 20a may be configured to identify the food item using a number of different techniques. In a first example, the memory 22a may store a food recognition module configured to analyze the images from the video camera 16a to identify a type of food in the image. The food recognition module may include one or more models for identifying a food. In some examples, the one or more models may be Artificial Intelligence (AI) models that pre-trained prior to loading the model(s) into the memory 22a of the video camera 16a. Alternatively, or additionally, one or more of the models may be trained for use in a specific facility 12 or a specific storage area 14a. The one or more models may be pre-trained or trained using deep neural artificial intelligence (AI) training, such as shown in Figure 3.

Referring to Figure 3, which is a flow chart of an illustrative method 200 for generating one or more AI models for food recognition, a diverse dataset of food images are collected or gathered, as shown at block 202. The images represent various types of food, various quality levels of food, various volumes of food, various food packaging, safety conditions (e.g., open packaging, improper packaging, cross-contamination, or the like). In some examples, the images selected may be generic to a number of different storage facilities. In other examples, the images may be selected specifically for a particular storage facility or for a particular storage area of a facility. Once the images have been collected or obtained, the images may be annotated with relevant labels, as shown at block 204. Some illustrative labels may include, but are not limited to, good, spoiled, contaminated, incorrectly packaged, type of food, category of food, volume of food, or the like. The labels may be used to create ground truth data for training the food recognition AI model(s).

Next, the annotated dataset (e.g., annotated images) may be used to train the AI model or AI engine, as shown at block 206. The AI engine may be trained to identify a shape of the food item, a label present on the food item, a volume of the food item, a barcode present on the food item and/or any other suitable food item characteristic. Training the AI model may include feeding the model with labeled (annotated) images and allowing the model to learn patterns and features to make accurate identifications and/or classifications. Once the AI model is trained, the trained AI model may be integrated into the video cameras 16a-n, as shown at block 208. It is contemplated that the trained AI model may be stored within the memory 22a-n of the video camera 16a-n such that the processor 20a-n may access the food recognition model(s). Next, the food recognition model may be tested and validated to ensure the accuracy and effectiveness of the model at the installation site, as shown at block 210. For example, the video camera 16a-n may be used to capture images of known food items and of a known food quality. The identified food types and qualities are output by the food recognition model, and may be compared to the actual food items and quality to verify the accuracy of the food recognition model. If the accuracy meets or exceeds a predetermined threshold (e.g., accurately identified a predetermined percentage of food items, quality, etc.), the video camera 16a-n may be deployed in a facility 12, or other monitoring location, as shown at block 212. If the accuracy does not meet the predetermined threshold, additional food images may be obtained, annotated, and incorporated into the training of the AI model. These steps may be repeated until the accuracy meets or exceeds the predetermined threshold. Once the video camera 16a-n has been deployed, the performance of the food recognition model may be routinely monitored to ensure it continues to function adequately, as shown at block 214. If performance of the food recognition module declines, additional food images may be obtained, annotated, and incorporated into the training of the AI model to improve the accuracy thereof.

Returning back to Figure 2, it is contemplated that the processor 20a of the video camera 16a may interpret and process the images captured by the video camera 16a to identify the food item 104 using a number of different algorithms and/or techniques, including the AI model described with respect to Figure 3. Some illustrative computer vision algorithms and/or techniques that may be used include, but are not limited to, image filtering (e.g., blurring, sharpening, and edge detection to enhance or extract specific features from an image), objection detection (e.g., identify and locate objects within an image or video stream, often using bounding boxes), image classification (e.g., training AI models to categorize images into predefined classes or labels, such as distinguishing between different objects or scenes), semantic segmentation (e.g., dividing an image into regions and assigning each pixel to a specific class, which helps in understanding the structure of an image), optical character recognition (OCR) (e.g., recognizing and converting text within images into editable and machine-readable formats), feature detection and matching (e.g., identifying distinctive points or features in images and finding their corresponding matches across multiple images), Image super-resolution (e.g., techniques to upscale low-resolution images while preserving or enhancing details), pose estimation (e.g., determining the pose or orientation of objects or humans in images or videos), image registration (e.g., aligning multiple images taken from different viewpoints or times to create a coherent representation), tracking (e.g., following the movement of objects or individuals across consecutive frames in a video), or the like. It is contemplated that any one or a combination of the above algorithms or techniques may be used to identify the food item captured in the image. For example, tracking may be utilized to determine that an item is entering the storage area 14a and trigger an analysis of the item. However, this is not required. Optical character recognition (OCR) may be used to recognize the words on a package or label of a food item, while image classification may be used to determine a quality of the food item. These are just some examples. In some cases, the image recognition module may be provided with more than one type of model to help identify the food type and/or quality.

Generally, the controller 20a of the video camera 16a may be configured to analyze the video stream or images captured by the video camera 16a to identify a shape of the food item, a color of the food item, a type of food item, whether or not external packaging is present, a quality of the food item, whether or not a label is present, whether or not a barcode is present, etc. In some cases, the controller 20a may be configured to use a number of different identification techniques to identify the food item. For example, the controller 20a may be configured to first attempt to identify a barcode or RFID tag attached to the food item. If a barcode or RFID tag is unavailable or unreadable, the controller 20a may be configured to identify a label. The controller 20a may sequentially use different identification techniques until the food item is identified. Alternatively, different identification techniques may be performed in parallel. When the food item includes a label information, identifying the food item 104 may include identifying the label of the food item in the captured video of the food storage area and comparing the label information of the label with a database of food items to identify the food item. When the food item is packaged with a barcode, identifying the food item 104 may include identifying the barcode of the food item in the captured video of the food storage area and decoding the barcode to identify the food item. In some examples, the barcode scanner 26a may be used to decode the barcode. In yet other examples, when the food item is packaged with an RFID tag, identifying the food item 104 may include reading the RFID tag at the RFID scanner 28a. When the identified food item has a shape and/or color, identifying the food item may include identifying the shape and/or color of the food item in the captured video of the food storage area and comparing the shape and/or color with a database of food item shapes and colors to help identify the food item. The various databases (e.g., food label, barcode, shape, or the like) may be stored in the memory 22a of the video camera 16a or may be stored in a remote device accessible over a wired or wireless network, as desired.

Once the food item and/or quality thereof has been identified, the processor 20a of the video camera 16a may identify one or more ideal food storage environmental parameters for the identified food, as shown at block 106. In some cases, the processor 20a may access a database including a list of food items and one or more corresponding ideal food storage environmental parameters. The database may be stored in the memory 22a of the video camera 16a or may be stored in a remote device accessible over a wired or wireless network, as desired. In some examples, the one or more ideal food storage environmental parameters may be one or more of a temperature setpoint, a relative humidity (RH) setpoint, or the like. Proper temperature and RH may be important for preserving the quality and safety of foods through techniques like refrigeration, freezing, and dehydration. It is contemplated that the temperature of the ambient surroundings and/or the relative humidity of the ambient surroundings may impact the quality, safety, and shelf life of various types of food products. For example, temperature and relative humidity may influence: microbial growth (e.g., high temperatures and/or high RH can create favorable conditions for bacteria, molds, and yeast to thrive, leading to food spoilage and potential foodborne illnesses), food spoilage (e.g., incorrect storage temperatures and high humidity levels can accelerate food spoilage, causing changes in texture, appearance, taste, and aroma of food products), enzymatic reactions (e.g., temperature and RH can influence enzymatic reactions in food, leading to undesirable changes in color, flavor, and nutritional content), chemical reactions (e.g., temperature can trigger chemical reactions, such as oxidation, which can negatively affect the quality and nutritional value of food), food texture and/or appearance (e.g., temperature can impact the texture and appearance of various food items - cold temperatures can affect the texture of fruits and vegetables while high temperatures can cause melting or deformations in chocolates and confections), or the like.

Further, maintaining proper temperature during transportation and storage can be important for perishable goods like fruits, vegetables, and dairy products to prevent spoilage and/or extend shelf life. Controlling RH may be important for moisture-sensitive foods like grains, cereals, and snacks to prevent clumping, mold growth, and/or deterioration. Additionally, inadequate temperature control in food processing, storage, and/or transportation can lead to the growth of pathogens and increase the risk of foodborne illnesses. It is further contemplated that maintaining the proper temperature and RH for a food item can help retain the nutritional content of said food item during processing and storage.

Once the controller 20a of the video camera 16a has identified and/or obtained the one or more ideal food storage environmental parameters, the controller 20a may transmit the one or more ideal food storage environmental parameters to the environmental control system 30, as shown at block 108. The controller 32 of the environmental control system 30 may then control the environmental control system 30 in accordance with the one or more ideal food storage environmental parameters. For example, the controller 32 of the environmental control system 30 may control the environmental control system equipment 46 associated with the storage area 14a such that one or more of the environmental parameters (e.g., temperature, relative humidity, etc.) of the storage area 14a match the one or more ideal food storage environmental parameters for the food item in that particular storage area 14a, as shown at block 110. This may include heating, cooling, humidifying, dehumidifying, or the like. In some cases, the environmental control system 30 may be configured to transmit one or more measured environmental parameters for the food storage area 14a to the video camera 16a. Said differently, one or more measured environmental parameters (e.g., temperature, relative humidity, or the like) for the food storage area 14a may be received by the video camera.

Optionally, the controller 20a of the video camera 16a may analyze the space available in the storage area 14a. For example, the controller 20a may be configured analyze the video stream captured by the camera 16a to identify an amount of space in the food storage area occupied by the food item. The amount of space occupied by the food item may be correlated to a quantity of food stored in the food storage area 14a and may facilitate inventory control. Alternatively, or additionally, the controller 20a may be configured analyze the video stream captured by the video camera 16a to identify an amount of unoccupied space in the food storage area 14a. The amount of unoccupied space may be used to determine how much additional food product can be placed in the food storage area 14a or to help with inventory control.

In some cases, the video camera 16a may identify the food item, and may reference a remote database to identify the ideal environmental parameters for the items. In some cases, the video camera 16a may identify the food item, send the identified food item to a remote device that identifies and returns the ideal environmental parameters for the identified item to the video camera, and then the video camera notifies the environmental control system to control the food storage area 14a appropriately. In some cases, the video camera 16a may identify the food item, and then send the identified food item to a remote device that identifies the ideal environmental parameters for the identified item and notifies the environmental control system to control the food storage area 14a appropriately. In some cases, the video camera 16a may identify the food item, identify the ideal environmental parameters for the identified item, and send control commands directly to environmental control equipment (e.g., rooftop unit, dehumidifier, humidifier, etc.) to control the environmental conditions in the food storage area, thereby performing some or all of the functions of the environmental control system 30. These are just examples.

It is contemplated that the video-based system 10 for controlling one or more environmental parameters of a food storage area 14a-n of a facility 12 may have advantages that contribute to food safety, reduced waste, and overall environmental and societal benefits. Some illustrative advantages may include, but are not limited to: food safety (e.g., sustainable food handling practices may prioritize hygiene, proper storage, and temperature control, reducing the risk of foodborne illnesses and ensuring the safety of consumers), waste reduction (e.g., by efficiently managing food storage and inventory, sustainable food handling may help minimize food waste and related economic and environmental impacts), resource conservation (e.g., sustainable food handling may optimize the use of resources like water, energy, and packaging materials, reducing resource consumption and promoting environmental conservation) energy efficiency (e.g., implementing energy-efficient practices in food handling, such as using energy-saving appliances and refrigeration systems, may lead to reduced energy consumption and greenhouse gas emissions), responsible packaging (e.g., sustainable food handling may encourage the use of eco-friendly and recyclable packaging materials, reducing plastic waste and environmental pollution), local sourcing (e.g., emphasizing local sourcing and supply chain shortening in food handling may support local farmers and producers, reduce transportation-related emissions, and enhance food security), reduced chemical use (e.g., sustainable food handling may promotes alternatives to chemical preservatives and additives, minimizing potential harm to human health and the environment), social and ethical considerations (e.g., sustainable food handling practices may prioritize fair labor practices, worker safety, and ethical treatment of employees along the food supply chain), innovation and technology (e.g., embracing sustainable food handling may encourage the adoption of innovative technologies that can improve efficiency and reduce environmental impacts), compliance with regulations (e.g., sustainable food handling practices may align with and often exceed food safety and environmental regulations, ensuring compliance and responsible business practices), consumer trust (e.g., sustainable food handling may foster consumer trust and loyalty as it may demonstrate a commitment to social and environmental responsibility), resilience to disruptions (e.g., sustainable food handling practices may result in more robust and resilient food systems better equipped to handle disruptions such as supply chain challenges or extreme weather events), or the like.

### Additional Examples

An example of the disclosure includes a method for controlling one or more environmental parameters of a food storage area of a facility. The method may comprise capturing video of a food storage area of a facility using a video camera and at the video camera: identifying a food item in the captured video of the food storage area, identifying one or more ideal food storage environmental parameters for the identified food item, and transmitting the identified one or more ideal food storage environmental parameters from the video camera to an environmental control system of the facility that services the food storage area. The method may further comprise controlling the environmental control system of the facility in accordance with the one or more ideal food storage environmental parameters transmitted by the video camera to the environmental control system.

Alternatively or additionally to any of the examples above, in another example, the one or more ideal food storage environmental parameters for the identified food item may comprise one of a temperature setpoint and a relative humidity setpoint for the environmental control system.

Alternatively or additionally to any of the examples above, in another example, the one or more ideal food storage environmental parameters for the identified food item may comprise a temperature setpoint and a relative humidity setpoint for the environmental control system.

Alternatively or additionally to any of the examples above, in another example, the environmental control system may comprise an HVAC system and/or a refrigeration system of the facility that services the food storage area of the facility.

Alternatively or additionally to any of the examples above, in another example, the identified food item may be packaged with a barcode. Identifying the food item may comprise identifying the barcode of the food item in the captured video of the food storage area and decoding the barcode to identify the food item.

Alternatively or additionally to any of the examples above, in another example, the identified food item may include a label with label information. Identifying the food item may comprise identifying the label of the food item in the captured video of the food storage area and comparing label information of the label with a database of food items to identify the food item.

Alternatively or additionally to any of the examples above, in another example, the identified food item may have a shape. Identifying the food item may comprise identifying the shape of the food item in the captured video of the food storage area and comparing the shape with a database of food item shapes to identify the food item.

Alternatively or additionally to any of the examples above, in another example, the method may further comprise receiving one or more measured environmental parameters for the food storage area by the video camera.

In another example, a video camera for use in a food storage area may comprise a camera housing, a camera housed by the camera housing, the camera providing a video stream of a food storage area, and a controller housed by the camera housing and operatively coupled to the camera. The controller may be configured to analyze the video stream captured by the camera to identify a food item in the food storage area, obtain one or more ideal food storage environmental parameters for the identified food item, and transmit the one or more ideal food storage environmental parameters to an environmental control system that services the food storage area.

Alternatively or additionally to any of the examples above, in another example, the video camera may further comprise an RFID scanner housed by the camera housing.

Alternatively or additionally to any of the examples above, in another example, the one or more ideal food storage environmental parameters for the identified food item may comprise one of a temperature setpoint and a relative humidity setpoint for the environmental control system.

Alternatively or additionally to any of the examples above, in another example, the controller may be configured to analyze the video stream captured by the camera to identify an amount of space in the food storage area occupied by the food item.

Alternatively or additionally to any of the examples above, in another example, the controller may be configured to analyze the video stream captured by the camera to identify an amount of unoccupied space in the food storage area.

Alternatively or additionally to any of the examples above, in another example, the controller may comprise a database that identifies one or more ideal food storage environmental parameters for each of a plurality of food items.

Alternatively or additionally to any of the examples above, in another example, the controller may comprise an Artificial Intelligence engine that is trained to analyze the video stream captured by the camera and identify each of a plurality of different food items including the identified food item.

Alternatively or additionally to any of the examples above, in another example, the controller may be configured to analyze the video stream to identify a shape of the food item, a label present on the food item, and/or a barcode present on the food item, and to compare the shape, the label and/or the barcode with a database of food items stored in a memory of the controller to identify the food item in the food storage area.

In another example, a video-based system for controlling one or more environmental parameters of a food storage area of a facility may comprise an environmental control system that services the food storage area of the facility and a video camera, The video camera may include a camera housing, a camera housed by the camera housing for providing a video stream of the food storage area, a communication port for communicating with the environmental control system, and a controller housed by the camera housing and operatively coupled to the camera and the communication port. The controller may be configured to analyze the video stream captured by the camera to identify a food item in the food storage area, identify one or more ideal food storage environmental parameters for the identified food item, and transmit the one or more ideal food storage environmental parameters for the identified food item to the environmental control system via the communication port.

Alternatively or additionally to any of the examples above, in another example, the environmental control system may comprise an HVAC system and/or a refrigeration system that services the food storage area of the facility.

Alternatively or additionally to any of the examples above, in another example, the environmental control system may be configured to control one or more environmental parameters in the food storage area based on the one or more ideal food storage environmental parameters transmitted by the controller of the video camera.

Alternatively or additionally to any of the examples above, in another example, the controller of the video camera may comprise an Artificial Intelligence engine that is trained to analyze the video stream captured by the camera and identify each of a plurality of different food items including the identified food item.

Having thus described several illustrative embodiments of the present disclosure, those of skill in the art will readily appreciate that yet other embodiments may be made and used within the scope of the claims hereto attached. It will be understood, however, that this disclosure is, in many respects, only illustrative. Changes may be made in details, particularly in matters of shape, size, arrangement of parts, and exclusion and order of steps, without exceeding the scope of the disclosure. The disclosure's scope is, of course, defined in the language in which the appended claims are expressed.

## Claims

1. A method for controlling one or more environmental parameters of a food storage area of a facility, the method comprising:
capturing video of a food storage area of a facility using a video camera;
at the video camera:
identifying a food item in the captured video of the food storage area;
identifying one or more ideal food storage environmental parameters for the identified food item;
transmitting the identified one or more ideal food storage environmental parameters from the video camera to an environmental control system of the facility that services the food storage area; and
controlling the environmental control system of the facility in accordance with the one or more ideal food storage environmental parameters transmitted by the video camera to the environmental control system.

2. The method of claim 1, wherein the one or more ideal food storage environmental parameters for the identified food item comprise one of a temperature setpoint and a relative humidity setpoint for the environmental control system.

3. The method of claim 1, wherein the one or more ideal food storage environmental parameters for the identified food item comprise a temperature setpoint and a relative humidity setpoint for the environmental control system.

4. The method of claim 1, wherein the environmental control system comprises an HVAC system and/or a refrigeration system of the facility that services the food storage area of the facility.

5. The method of claim 1, wherein the identified food item is packaged with a barcode, wherein identifying the food item comprises identifying the barcode of the food item in the captured video of the food storage area and decoding the barcode to identify the food item.

6. The method of claim 1, wherein the identified food item includes a label with label information, wherein identifying the food item comprises identifying the label of the food item in the captured video of the food storage area and comparing label information of the label with a database of food items to identify the food item.

7. The method of claim 1, wherein the identified food item has a shape, wherein identifying the food item comprises identifying the shape of the food item in the captured video of the food storage area and comparing the shape with a database of food item shapes to identify the food item.

8. The method of claim 1, further comprising receiving one or more measured environmental parameters for the food storage area by the video camera.

9. A video camera for use in a food storage area, comprising:
a camera housing;
a camera housed by the camera housing, the camera providing a video stream of a food storage area;
a controller housed by the camera housing and operatively coupled to the camera, the controller configured to:
analyze the video stream captured by the camera to identify a food item in the food storage area;
obtain one or more ideal food storage environmental parameters for the identified food item; and
transmit the one or more ideal food storage environmental parameters to an environmental control system that services the food storage area.

10. The video camera of claim 9, further comprising an RFID scanner housed by the camera housing.

11. The video camera of claim 9, wherein the one or more ideal food storage environmental parameters for the identified food item comprise one of a temperature setpoint and a relative humidity setpoint for the environmental control system.

12. The video camera of claim 9, wherein the controller is configured to analyze the video stream captured by the camera to identify an amount of space in the food storage area occupied by the food item.

13. The video camera of claim 9, wherein the controller comprises a database that identifies one or more ideal food storage environmental parameters for each of a plurality of food items.

14. The video camera of claim 9, wherein the controller comprises an Artificial Intelligence engine that is trained to analyze the video stream captured by the camera and identify each of a plurality of different food items including the identified food item.

15. The video camera of claim 9, wherein the controller is configured to analyze the video stream to identify a shape of the food item, a label present on the food item, and/or a barcode present on the food item, and to compare the shape, the label and/or the barcode with a database of food items stored in a memory of the controller to identify the food item in the food storage area.
